# EUROPÄISCHE PATENTSCHRIFT

(11) **EP 1 577 040 B1**
(45) Veröffentlichungstag und Bekanntmachung des Hinweises auf die Patenterteilung: **29.11.2006**
(21) Anmeldenummer: 05001962.9
(22) Anmeldetag: 31.01.2005
(51) Int. Cl.: B23D 63/00, B23Q 1/62

(54) **Vorrichtung zum Bearbeiten von Werkstücken, insbesondere von mit Schneidzähnen versehenen Werkstücken**
Device for machining workpieces, in particular for workpieces provided with teeth
Dispositif d'usinage de pièces, notamment pour des pièces pourvues de dents

(30) Priorität: 16.03.2004 DE 102004012841
(43) Veröffentlichungstag der Anmeldung: 21.09.2005
(73) Patentinhaber: VOLLMER WERKE MASCHINENFABRIK GMBH, D-88400 Biberach (DE)
(72) Erfinder: Bailer,Norbert, 88433 Schemmerhofen-Altheim (DE); Lenard, Peter, 88400 Biberach (DE); Beck, Ernst, 88400 Biberach (DE)
(74) Vertreter: Thum, Bernhard

(56) Entgegenhaltungen:
- EP-A- 0 893 196
- EP-A- 1 166 953
- WO-A-02/085564
- DE-A1- 19 830 391
- DE-C1- 19 743 528

## Beschreibung

Die vorliegende Erfindung betrifft eine Vorrichtung zum Bearbeiten von Werkstücken, insbesondere von mit Schneidzähnen versehenen Werkstücken, wie beispielsweise von Bandsägeblättern oder/und von Kreissägeblättern nach dem Oberbegriff von Patentanspruch 1. Eine solche Vorrichtung ist dem Dokument EP-A-0 893196 zu entnehmen.

Aus der EP-A-1 166 953 und der DE 198 30 391 A1 sind jeweils verfahrbare Führungssysteme von Werkzeugmaschinen bekannt. Dabei sind Trägerrahmen vorgesehen, die mit einem Grundkörper der Werkzeugmaschine gekoppelt sind. Mittels der verfahrbaren Führungssysteme wird das mit der Spindel der Werkzeugmaschine verbundene Werkzeug in entsprechende Bearbeitungspositionen gebracht. In der EP-A-0 893 196 ist eine Anordnung gezeigt, bei der ein die Bearbeitungseinrichtung einer Werkzeugmaschine umgebender Trägerrahmen innerhalb eines mit dem Grundkörper der Werkzeugmaschine gekoppelten Grundrahmens verfahrbar angeordnet ist. Des Weiteren ist aus der WO 02/085564 eine Schleifmaschine für Sägeblätter bekannt. Die Schleifmaschine weist zwei vollständige Schleifstationen auf, deren Schleifköpfe über entsprechende Positioniereinrichtungen in Bezug auf das zu schleifende Sägeblatt bewegbar sind. Die zu schleifenden Sägeblätter werden auf einer Drehvorrichtung befestigt und so in Position relativ zu den einzelnen Schleifmaschinen gebracht.

Eine Vorrichtung zum Bearbeiten von Bandsägeblättern ist beispielsweise aus der WO 96/37328 bekannt. Mit dieser bekannten Vorrichtung kann die Zahnbrust von Schneidzähnen von Bandsägeblättern bearbeitet werden. Dies geschieht dadurch, dass ein Schleifschlitten, an dem eine Schleifscheibe angebracht ist, entlang einer Positionierachse hubweise verlagerbar ist. Eine derartige Maschine besitzt verhältnismäßig wenige Variationsmöglichkeiten zur Bearbeitung. Es hat sich im Stand der Technik gezeigt, dass es zur Erweiterung der Einsatzmöglichkeiten derartiger Maschinen erforderlich ist, zusätzlich zu der Hubachse zur hubweisen Bewegung der Schleifscheibe weitere Achsen anzuordnen, die eine nahezu beliebige Positionierung der Schleifscheibe oder eines weiteren Schleifwerkzeugs relativ zu dem Bandsägeblatt oder zu einem anderen zu bearbeitenden Werkstück ermöglichen. Daher wurden in der Vergangenheit zusätzlich zu der Hubachse verschiedene weitere Positionierachsen zur Verlagerung des Schleifwerkzeugs angebracht. Mit der Zunahme der Anzahl dieser Positionierachsen wurde der Aufbau der Maschinen immer raumfordernder. Ein erhebliches Problem bestand darin, die an der Schleifscheibe auftretenden mechanischen Belastungen über die verschiedenen Führungsanordnungen, die den jeweiligen Positionierachsen zugeordnet sind, abzuleiten. Aufgrund der raumfordernden Bauweise ergeben sich erhebliche Hebelarme zwischen dem Entstehungsort von Kräften, nämlich dem Kontaktpunkt von Schleifscheibe und dem zu bearbeitenden Werkstück, und der Führung der Bearbeitungseinrichtung entlang der jeweiligen Positionierachsen. In der Folge kam es zu erheblichen Verwindungen, die zu Maßungenauigkeiten und unbefriedigenden Bearbeitungsergebnissen führten.

Es ist daher eine Aufgabe der vorliegenden Erfindung, eine Vorrichtung der eingangs bezeichneten Art bereitzustellen, bei der die auftretenden Hebelkräfte und die daraus resultierenden Verwindungen klein gehalten werden können, und die weitere Freiheitsgrade bezüglich der Positionierung eines oder mehrere Bearbeitungswerkzeuge bereitstellt.

Diese Aufgabe wird durch die Merkmalskombination des Anspruchs 1 gelöst. Bevorzugte Ausführungen der Erfindung sind den abhängigen Ansprüchen zu entnehmen.

Gemäß einer Ausführungsvariante der Erfindung ist vorgesehen, dass die Mehrachsanordnung in einer zentralen Öffnung des Trägerrahmens aufgenommen und von dem Trägerrahmen umschlossen ist. Dadurch kann die Stabilität der gesamten Anordnung erhöht werden. Ein geschlossener Trägerrahmen, der in seinem Zentrum die Mehrachsanordnung aufnimmt, bietet eine sehr hohe Verwindungssteifigkeit und verhältnismäßig ausgedehnte Flächen zur Einleitung von an der Mehrachsanordnung auftretenden Bearbeitungskräften. Darüber hinaus wird durch einen derartigen Trägerrahmen die Montierbarkeit der erfindungsgemäßen Vorrichtung verbessert. So lässt sich die Mehrachsanordnung in den Trägerrahmen einsetzen und dort einfacher montieren, als dies bei Mehrachsanordnungen der Fall ist, die quasi freitragend an einem Maschinengestell angebracht werden müssen.

Hinsichtlich der Mehrachsanordnung sieht eine Weiterbildung der Erfindung vor, dass diese eine erste Positionierachse aufweist, die eine Verlagerung des Bearbeitungswerkzeugs innerhalb des Trägerrahmens in Richtung entlang der Längserstreckung oder der Quererstreckung des Trägerrahmens ermöglicht.

Darüber hinaus kann zusätzlich oder alternativ zu der ersten Positionierachse vorgesehen sein, dass die Mehrachsanordnung eine zweite Positionierachse aufweist, die eine Verlagerung des Bearbeitungswerkzeugs innerhalb des Trägerrahmens in Richtung orthogonal zu einer von der Längserstreckungsrichtung und der Quererstreckungsrichtung des Trägerrahmens aufgespannten Ebene ermöglicht

Zur Durchführung von Zahnflankenschleifarbeiten sieht eine Weiterbildung der Erfindung vor, dass die Bearbeitungseinrichtung ein um eine weitere Bearbeitungsachse drehantreibbares weiteres Bearbeitungswerkzeug aufweist, wobei die Bearbeitungsachsen der Bearbeitungswerkzeuge im Wesentlichen parallel zueinander verlaufen. Demnach sind zwei drehantreibbare Bearbeitungswerkzeuge, wie beispielsweise zwei Schleifscheiben vorgesehen, die gleichzeitig an einander entgegengesetzten Zahnflanken des zu bearbeitenden Werkstücks, beispielsweise einem Bandsägeblatt oder einem Kreissägeblatt, angreifen können.

Zur Vereinfachung des Aufbaus sieht eine Weiterbildung der Erfindung vor, dass die beiden Bearbeitungsachsen der ersten Positionierachse zugeordnet und entlang dieser unabhängig voneinander verlagerbar sind. Dies bedeutet, dass die beiden Bearbeitungswerkzeuge, beispielsweise die beiden Schleifscheiben, zusammen mit ihren Drehantrieben entlang ein- und derselben Positionierachse unter Ausnutzung der dieser zugeordneten Führungsmittel verlagerbar sind, wobei jedoch jeder der Bearbeitungsachsen ein eigener Antrieb zugeordnet ist, so dass die beiden Bearbeitungsachsen unabhängig voneinander verlagerbar sind. Dadurch lässt sich eine raumsparende Anordnung mit zugleich hoher Fertigungsflexibilität erreichen.

Vorzugsweise ist der Trägerrahmen in einer zentralen Öffnung des Aufnahmerahmens aufgenommen und von dem Aufnahmerahmen umschlossen. Dabei ist es möglich, den Trägerrahmen innerhalb des Aufnahmerahmens entlang einer dritten Positionierachse zu verlagern, so dass sich in Kombination mit der ersten und zweiten Positionierachse eine Positionierung des Bearbeitungswerkzeugs entlang drei zueinander im Wesentlichen orthogonalen Achsen möglich ist. Mit einer derartigen Anordnung, d.h. mit einer Mehrachsanordnung innerhalb des Trägerrahmens, wobei letzterer innerhalb des Aufnahmerahmens entlang einer dritten Achse verlagerbar ist, lassen sich mit einer kompakten und hinsichtlich Kraftübertragung und Stabilität hohen Anforderungen gerecht werdenden Konstruktion sämtliche Positionen im Raum anfahren.

Gemäß einer Weiterbildung der Erfindung ist vorgesehen, dass das Bearbeitungswerkzeug an dem zu bearbeitenden Werkstück an einem vorbestimmten geometrischen Punkt angreift, wobei die Schwenkachse im Wesentlichen durch den geometrischen Punkt verläuft. Wie eingangs im Hinblick auf den Stand der Technik bereits festgestellt, ist es von besonderer Bedeutung, die verschiedenen Positionierachsen und die diesen zugeordneten Führungen in räumlicher Nähe zu dem geometrischen Punkt anzubringen, um die auftretenden Hebelarme und die daraus resultierenden Verwindungen möglichst klein zu halten. Durch die Verwendung eines Trägerrahmens und eines diesen aufnehmenden Aufnahmerahmens ist es möglich, die Mehrachsanordnung in kompakter Bauweise zusammenzufassen und die Abstände zwischen den einzelnen Führungen der Positionierachsen bzw. der Schwenkachse klein zu halten. In Weiterbildung dieser Gedanken ist der Aufnahmerahmen vorzugsweise oberhalb der Einspannvorrichtung angeordnet und ragt die Bearbeitungseinrichtung aus dem Aufnahmerahmen nach unten auf die Einspannvorrichtung zu. Aufgrund der hohen Stabilität und Biege- sowie Verwindungssteifigkeit der aus Trägerrahmen und Aufnahmerahmen gebildeten Rahmenanordnung ist es ohne wesentliche Verwindungen möglich, das oder die Bearbeitungswerkzeuge in gut einsehbarer und überwachbarer Position oberhalb der Einspannvorrichtung anzuordnen. Darüber hinaus lassen sich durch die offene Ausbildung des Trägerrahmens und des Aufnahmerahmens verhältnismäßig große Verfahrweg entlang der einzelnen Positionierachsen erreichen, was die Flexibilität der Maschine erhöht.

Bei einer Weiterbildung der Erfindung kann an der Bearbeitungseinrichtung ein Messkopf angebracht sein, um das zu bearbeitende Werkstück vor und nach der Bearbeitung einfach vermessen zu können. Aufgrund der hohen Formstabilität der Rahmenanordnung lassen sich hochwertige Messergebnisse mit allenfalls geringen Fehlern erreichen.

Eine Weiterbildung der Erfindung sieht vor, dass die Verlagerung der Bearbeitungseinrichtung entlang wenigstens einer der Positionierachsen, vorzugsweise entlang jeder der Positionierachsen, oder/und gegebenenfalls die Verschwenkung um die Schwenkachse numerisch gesteuert erfolgt.

Gemäß einer bevorzugten Ausführungsform ist das Bearbeitungswerkzeug eine Schleifscheibe. Es ist aber auch möglich, andere Bearbeitungswerkzeuge zu verwenden, wie beispielsweise Erodierköpfe oder dergleichen.

Die Erfindung wird im Folgenden anhand der beiliegenden Figuren erläutert und stellen dar:
- Fig.1: eine räumlich gezeigte teilweise aufgeschnittene Darstellung einer ersten Ausführungsform der erfindungsgemäßen Vorrichtung;
- Fig.2: eine Ansicht in Blickrichtung II-II gemäß Fig.1, wobei nur der obere Teil der erfindungsgemäßen Vorrichtung, nämlich die Rahmenstruktur gezeigt ist;
- Fig.3: eine Ansicht des in Fig.2 gezeigten Teils der Vorrichtung, geschnitten entlang Schnittlinie III-III;
- Fig.4: eine perspektivische Ansicht des in Fig.2 gezeigten Teils der erfindungsgemäßen Vorrichtung;
- Fig.4a: eine Ansicht entsprechend Fig.4, wobei jedoch der Aufnahmerahmen weggelassen wurde;
- Fig.5: eine Ansicht entsprechend Fig.4 einer zweiten Ausführungsform der erfindungsgemäßen Vorrichtung;
- Fig.6: eine Ansicht entsprechend Fig.5, wobei jedoch der Aufnahmerahmen weggelassen wurde;
- Fig.7: eine Draufsicht auf den in Fig.6 gezeigten Teil des zweiten Ausführungsbeispiels;
- Fig.8: eine Schnittansicht entlang der Schnittlinie VIII-VIII aus Fig.5;
- Fig.9: eine Vorderansicht der in Fig. 6 gezeigten Anordnung.

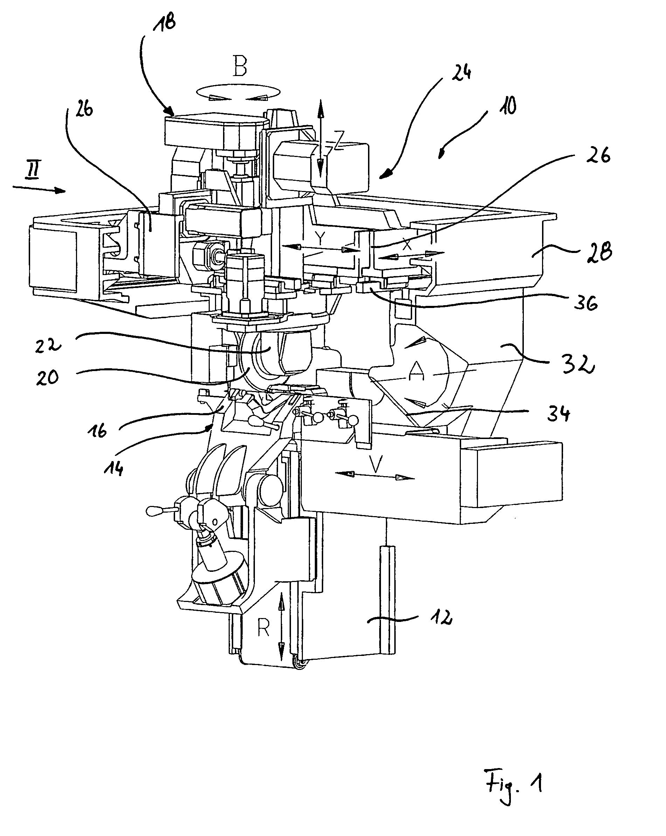

In Fig.1 ist eine erfindungsgemäße Vorrichtung allgemein mit 10 bezeichnet. Diese umfasst eine Basis 12, an der eine Einspannvorrichtung 14 vorgesehen ist. Die Einspannvorrichtung dient zur Einspannung eines nicht gezeigten Bandsägeblatts, welches mit einer schwenkbaren Klemmbacke 16 gegen einen Gegenhalter einklemmbar ist.

Die Vorrichtung 10 umfasst ferner eine Bearbeitungseinrichtung 18 mit einem als Schleifscheibe ausgebildeten Bearbeitungswerkzeug 20. Die Schleifscheibe wird über einen Drehantrieb 22 drehangetrieben. Die drehangetriebene Schleifscheibe 20 lässt sich über eine Mehrachsanordnung 24 entlang den in Fig.1 gezeigten Positionierachsen X, Y und Z in verschiedene Bearbeitungspositionen bezüglich der Einspannvorrichtung 14 positionieren. Darüber hinaus lässt sich die Schleifscheibe 20 um die Schwenkachse B verschwenken. Schließlich ist auch eine Verschwenkung der Mehrachsanordnung 24 um die Schwenkachse A möglich. Fig.1 zeigt ferner eine Vorschubachse V, mittels der das nicht gezeigte Bandsägeblatt zahnweise verschoben werden kann.

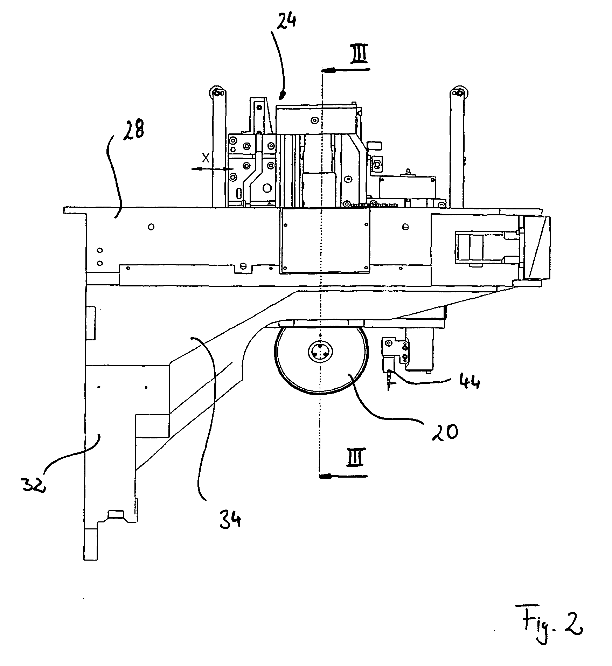

Im Folgenden soll insbesondere auf die konstruktive Gestaltung der Mehrachsanordnung 24 und deren Anbringung an der Basis 12 eingegangen werden. Hierzu wird zusätzlich auf die Fig.2 bis 4 Bezug genommen.

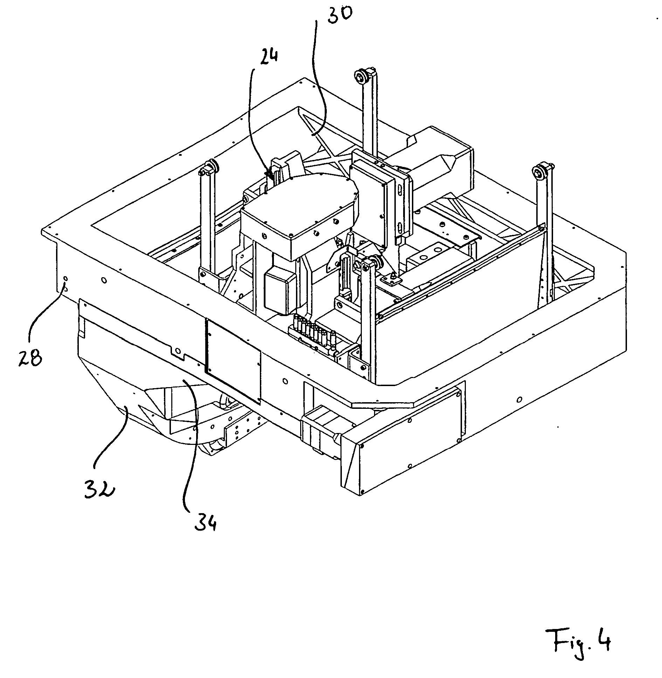

Die Mehrachsanordnung 24 ist in einem Trägerrahmen 26 aufgenommen, wie dies insbesondere aus den Figuren 1, 3 und 4a hervorgeht. Der Trägerrahmen 26 ist von einer geschlossenen Rahmenstruktur gebildet und weist eine zentrale Öffnung auf, durch die die Mehrachsanordnung 24 hindurchragt. Die Mehrachsanordnung 24 umfasst in dem Ausführungsbeispiel gemäß Figuren 1 bis 4 und 4a Antriebs- und Führungsmittel zur Bewegung des Bearbeitungswerkzeugs 20 in Richtung der Positionierachse Z sowie zur Bewegung in Richtung der Positionierachse Y. Darüber hinaus umfasst die Mehrachsanordnung 24 auch Antriebs- und Schwenkmittel zum Verschwenken des Werkzeugs 20 um die Schwenkachse B.

Der Trägerrahmen 26 ist in einem Aufnahmerahmen 28 aufgenommen, der ebenfalls eine geschlossene Rahmenstruktur aufweist, die zum Teil durch Verstärkungsrippen 30 versteift ist. Der Trägerrahmen 26 und der Aufnahmerahmen 28 besitzen im Wesentlichen rechteckige Gestalt und sind vorzugsweise aus hochstabilem Gussmaterial hergestellt. An dem Aufnahmerahmen 28 ist ein Lagerarm 32 angeformt, mittels dem der Aufnahmerahmen 28 an der Basis 12 angebracht und um die Schwenkachse A verschwenkt werden kann. Auch der Lagerarm 32 ist formstabil, insbesondere durch den Einsatz von Verstärkungsrippen, ausgebildet und damit verwindungssteif.

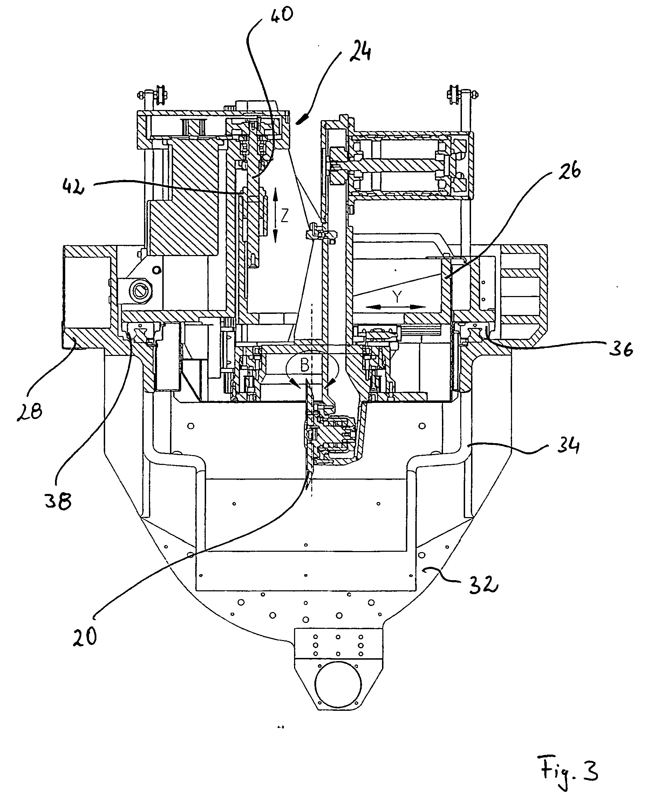

Der Trägerrahmen 26 stützt sich über Linearführungen 36, 38 an dem Aufnahmerahmen 28 ab und ist entlang dieser Linearführungen 36, 38 in Richtung der Positionierachse X verlagerbar. Für eine Verlagerung entlang der einzelnen Positionierachsen sind jeweils Linearantriebe insbesondere Spindel-Mutter-Antriebseinrichtungen vorgesehen, wie dies in Fig.3 insbesondere für die Verlagerung entlang der Positionierachse Z gezeigt ist. Dort ist die Gewindespindel mit 40 und Mutter mit 42 bezeichnet.

In Fig.2 ist ferner ein Messkopf 44 erkennbar, der ebenfalls mit der Bearbeitungseinrichtung 18 im Bereich des Bearbeitungswerkzeugs 20 verlagerbar ist.

Im Betrieb lässt sich das Bearbeitungswerkzeug 20 bzw. der Messkopf 44 mittels der Mehrachsanordnung 24 innerhalb des Trägerrahmens 26 entlang der Positionierachsen Y und Z verlagern. Ferner lässt sich das Bearbeitungswerkzeug 20 um die Schwenkachse B innerhalb des Trägerrahmens 26 drehen. Für eine Verlagerung entlang der Positionierachse X lässt sich numerisch gesteuert der Trägerrahmen 26 auf den Linearführungen 36 und 38 innerhalb des Aufnahmerahmens 28 verlagern. Der Aufnahmerahmen 28 lässt sich wiederum für eine Verschwenkung des Bearbeitungswerkzeugs 20 um die Schwenkachse A verschwenken.

Dadurch lassen sich eine Vielzahl von Bearbeitungssituationen erreichen, in denen das Bearbeitungswerkzeug 20 in eine gewünschte Relativposition und Relativlage zu dem zu bearbeitenden Werkstück, beispielsweise einem Bandsägeblatt gebracht werden kann. Wie insbesondere aus Fig.1 ersichtlich wird, ist die Mehrachsanordnung 24 in kompakter Weise innerhalb des Trägerrahmens 26 zusammengefasst und in diesen aufgenommen. An dem Bearbeitungswerkzeug 20 auftretende Bearbeitungskräfte lassen sich über verhältnismäßig kurze Hebelarme in den Trägerrahmen 26 einleiten. Der Trägerrahmen 26 ist ebenfalls in kompakter jedoch stabiler und verwindungssteifer Weise über die Linearführungen 36 und 38 innerhalb des massiv ausgebildeten Aufnahmenrahmens 28 aufgenommen, so dass Reaktionskräfte von dem Trägerrahmen 26 zuverlässig und ohne signifikante Verwindungen in den Aufnahmerahmen 28 eingeleitet werden können. Von dem Aufnahmerahmen 28 lassen sich diese Reaktionskräfte über den Lagerarm 32 in die Basis 12 ableiten. Aufgrund der offenen Rahmenstruktur kann die Mehrachsanordnung 24 aus dem Trägerrahmen 26 und dem Aufnahmerahmen 28 jeweils nach oben und nach unten herausragen. Dennoch ist eine zuverlässige Krafteinleitung in die Rahmenstruktur möglich.

Durch die in Fig.1 gezeigte Anordnung lässt sich das Bearbeitungswerkzeug 20 von oben oberhalb der Bearbeitungsposition an das nicht gezeigte zu bearbeitende Werkstück heranführen. Die Rahmenstruktur stützt die Bearbeitungseinrichtung 18 zuverlässig und ermöglicht verhältnismäßig große Arbeitshübe, um Werkstücke unterschiedlichster Gestalt und Dimensionierung bearbeiten zu können.

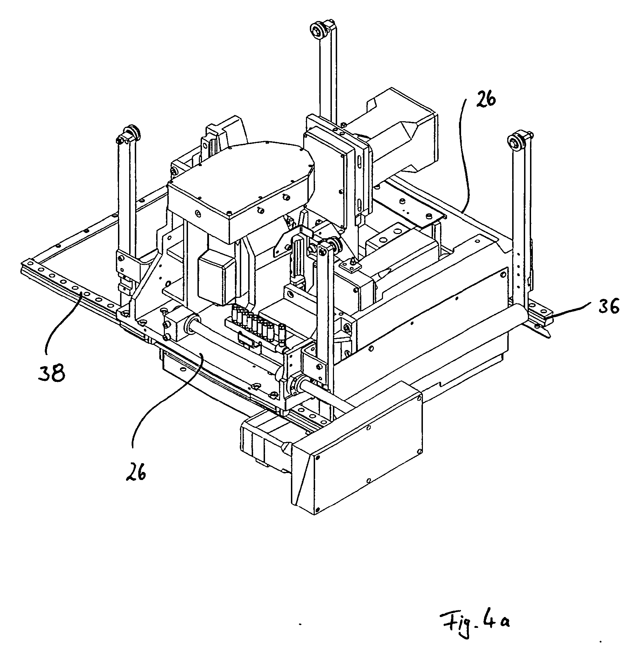

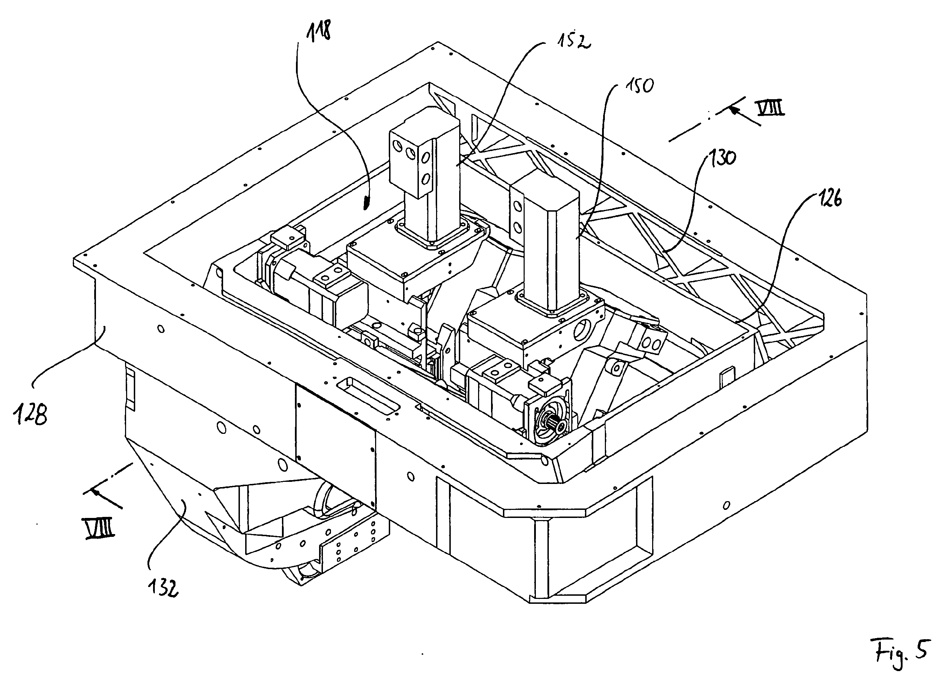

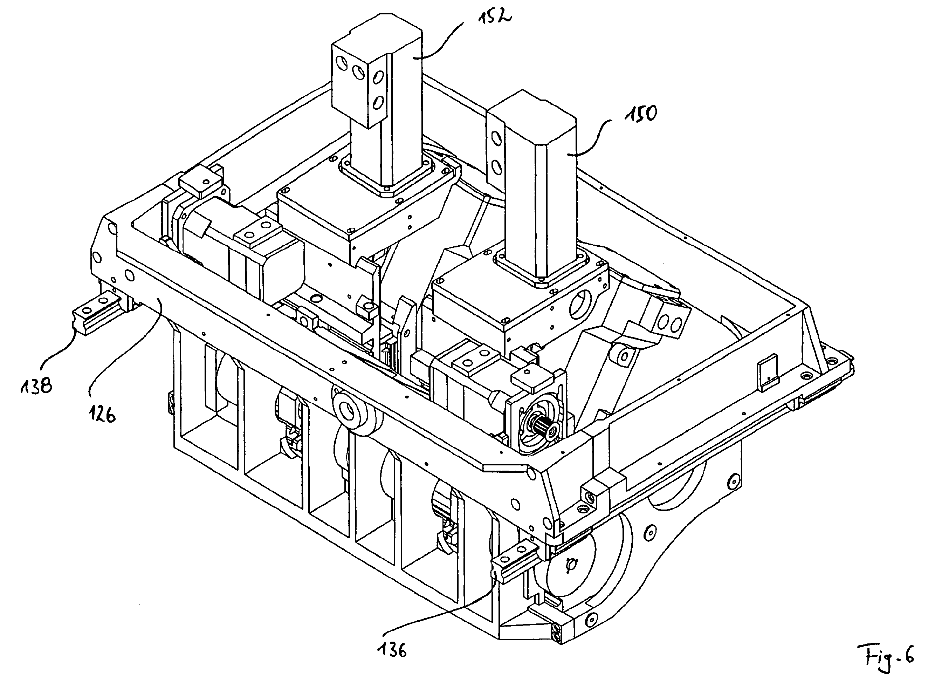

Fig.5 bis 9 zeigen ein zweites Ausführungsbeispiel der erfindungsgemäßen Vorrichtung. Zur Vermeidung von Wiederholungen soll lediglich auf die Unterschiede zu dem Ausführungsbeispiel gemäß Fig.1 bis 4 und 4a Bezug genommen werden. Zur Erleichterung der Beschreibung werden die selben Bezugszeichen wie vorangehend verwendet, jedoch mit der Ziffer 1 vorangestellt.

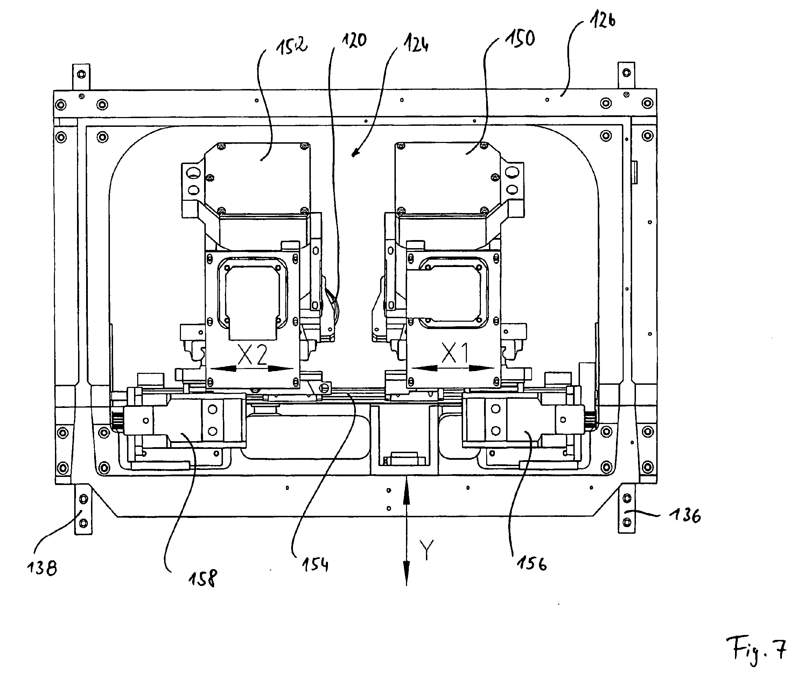

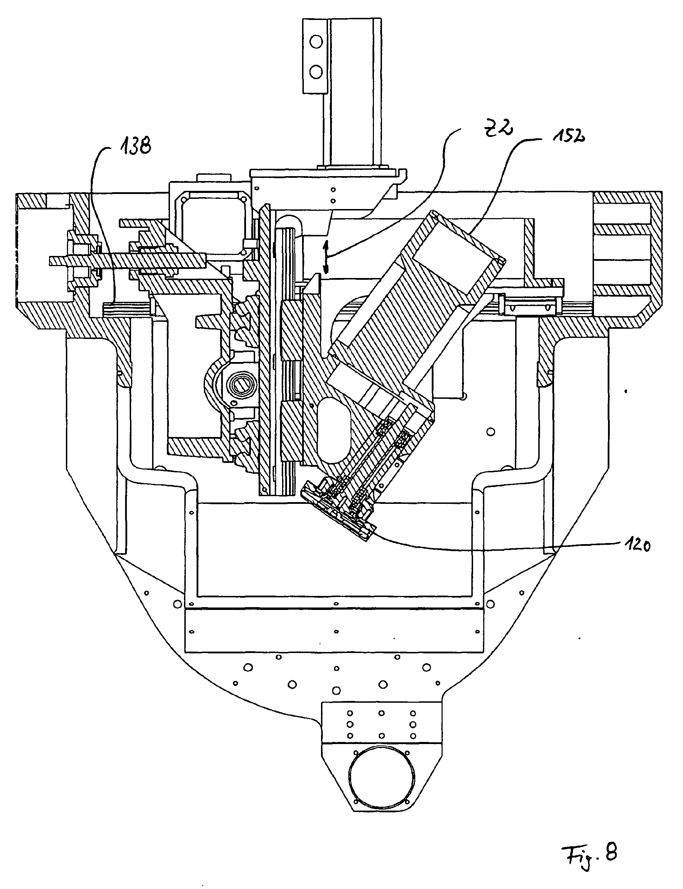

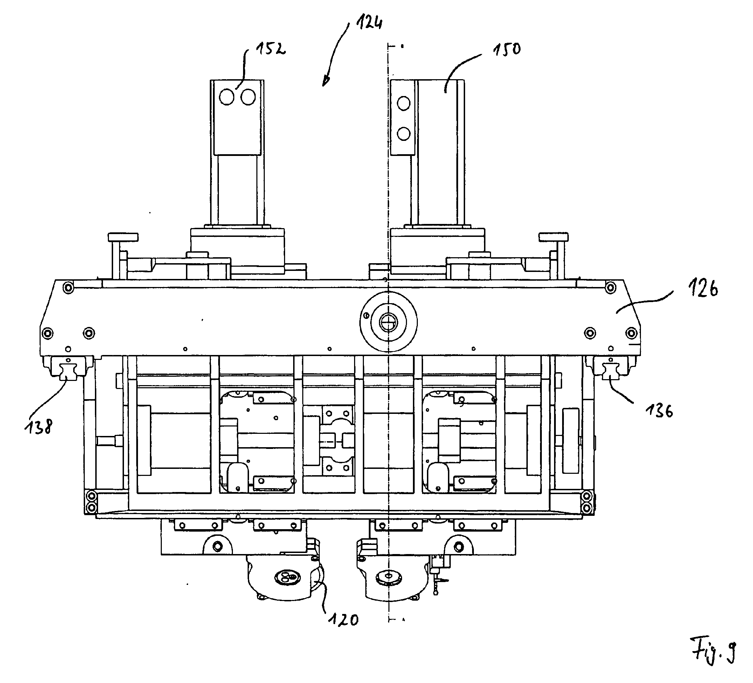

Bei dem zweiten Ausführungsbeispiel gemäß 5 bis 9 ist die in dem Aufnahmerahmen angeordnete Mehrachsanordnung 124 mit zwei drehangetriebenen Bearbeitungseinheiten 150 und 152 ausgebildet. Beide Bearbeitungseinheiten umfassen jeweils ein drehantreibbares Bearbeitungswerkzeug, nämlich jeweils eine drehantreibbare Schleifscheibe, wie in Fig.8 im Schnitt und in Fig. 9 gezeigt. Die beiden Bearbeitungseinheiten 150 und 152 sind auf einer gemeinsamen Führungsanordnung 154 innerhalb des Trägerrahmens 126 linear geführt und lassen sich über zugeordnete Antriebe 156, 158, wie in Fig.7 gezeigt entlang der Positionierachse X, unabhängig voneinander verlagern. Ferner lassen sich beide Bearbeitungswerkzeuge entlang den den jeweiligen Bearbeitungseinheiten 150, 152 zugeordneten Z-Achsen in Richtung der Positionierachse Z verlagern. In Fig.8 ist davon die Achse Z2 gezeigt. So ist es möglich, beide Bearbeitungswerkzeuge unabhängig voneinander relativ zu dem in den Fig.5 bis 8 nicht gezeigten zu bearbeitenden Werkstück zu positionieren. Über die Linearführungen 136 und 138 lässt sich wiederum der Trägerrahmen 126 relativ zu dem Aufnahmerahmen 128 in Richtung der Positionierachse Y verlagern, wie ebenfalls in Fig.7 gezeigt. Der Aufnahmerahmen 128 lässt sich wieder über den Lagerarm 132 schwenkbar um die Schwenkachse A, wie in Fig.1 für das erste Ausführungsbeispiel gezeigt, relativ zur Basis verlagern.

Mit der in Fig.5 bis 9 gezeigten zweiten Ausführungsform der erfindungsgemäßen Vorrichtung lassen sich Flankenschleifoperationen an dem zu bearbeitenden Werkstück ausführen. Die in Fig.5 bis 9 gezeigte Vorrichtung gemäß dem zweiten erfindungsgemäßen Ausführungsbeispiel besitzt die selben Vorteile, wie vorstehend bezüglich der ersten Ausführungsbeispiels beschrieben, nämlich eine hohe Formstabilität, eine hohe Variabilität bei der Bearbeitung von Werkstücken sowie einen kompakten Aufbau bei einfacher Montage und guter Zugänglichkeit an der Bearbeitungsposition.

## Patentansprüche

1. Vorrichtung (10) zum Bearbeiten von Werkstücken, insbesondere von mit Schneidzähnen versehenen Werkstücken wie beispielsweise von Bandsägeblättern oder von Kreissägeblättern, umfassend:
- eine Basis (12),
- eine relativ zu der Basis (12) verlagerbare Bearbeitungseinrichtung (18) mit wenigstens einem um eine Antriebsachse drehantreibbaren Bearbeitungswerkzeug (20) und
- einer Einspannvorrichtung (14) zum Festlegen des zu bearbeitenden Werkstücks,
wobei die Bearbeitungseinrichtung (18) mit einer Mehrachsanordnung (24) ausgebildet ist, vermittels welcher das Bearbeitungswerkzeug (20) relativ zu dem zu bearbeitenden Werkstück in verschiedenen Bearbeitungspositionen positionierbar ist,
wobei weiter die Mehrachsanordnung (24) innerhalb eines zumindest einseitig offenen, mit der Basis (12) gekoppelten Trägerrahmens (26) aufgenommen ist, und wobei der Trägerrahmen (26) in einem Aufnahmerahmen (28) aufgenommen ist,
**dadurch gekennzeichnet, dass** der Aufnahmerahmen (28) relativ zu der Basis (12) um eine Schwenkachse (A) verschwenkbar ist.

2. Vorrichtung (10) nach Anspruch 1,
**dadurch gekennzeichnet, dass** die Mehrachsanordnung (24) in einer zentralen Öffnung des Trägerrahmens (26) aufgenommen und von dem Trägerrahmen (26) umschlossen ist.

3. Vorrichtung (10) nach Anspruch 1 oder 2,
**dadurch gekennzeichnet, dass** die Mehrachsanordnung (24) eine erste Positionierachse (X) aufweist, die eine Verlagerung des Bearbeitungswerkzeugs (20) innerhalb des Trägerrahmens (26) in Richtung entlang der Längserstreckung oder der Quererstreckung des Trägerrahmens (26) ermöglicht.

4. Vorrichtung (10) nach einem der Ansprüche 1 bis 3,
**dadurch gekennzeichnet, dass** die Mehrachsanordnung (24) eine zweite Positionierachse (Z) aufweist, die eine Verlagerung des Bearbeitungswerkzeugs (20) innerhalb des Trägerrahmens (26) in Richtung orthogonal zu einer von der Längserstreckungsrichtung und der Quererstreckungsrichtung des Trägerrahmens (26) aufgespannten Ebene ermöglicht.

5. Vorrichtung nach einem der vorangehenden Ansprüche,
**dadurch gekennzeichnet, dass** die Bearbeitungseinrichtung (18) ein um eine weitere Bearbeitungsachse drehantreibbares weiteres Bearbeitungswerkzeug (20) aufweist,
wobei Bearbeitungsachsen der Bearbeitungswerkzeuge im Wesentlichen parallel zueinander verlaufen.

6. Vorrichtung (10) nach Anspruch 5,
**dadurch gekennzeichnet, dass** die beiden Bearbeitungsachsen der ersten Positionierachse (X) zugeordnet und entlang dieser unabhängig voneinander verlagerbar sind.

7. Vorrichtung (10) nach einem der vorhergehenden Ansprüche,
**dadurch gekennzeichnet, dass** der Trägerrahmen (26) in dem Aufnahmerahmen (28) entlang einer dritten Positionierachse (Y) verlagerbar ist, die eine Verlagerung in Richtung entlang der Quererstreckung oder der Längserstreckung des Trägerrahmens (26), vorzugsweise in Richtung entlang orthogonal zu der ersten und der zweiten Positionierachse (X, Z), ermöglicht.

8. Vorrichtung (10) nach einem der vorhergehenden Ansprüche,
**dadurch gekennzeichnet, dass** der Trägerrahmen (26) in einer zentralen Öffnung des Aufnahmerahmens (28) aufgenommen und von dem Aufnahmerahmen (28) umschlossen ist.

9. Vorrichtung (10) nach einem der vorangehenden Ansprüche,
**dadurch gekennzeichnet, dass** das Bearbeitungswerkzeug (20) an dem zu bearbeitenden Werkstück an einem vorbestimmten geometrischen Punkt angreift, wobei die Schwenkachse (A) im Wesentlichen durch den geometrischen Punkt verläuft.

10. Vorrichtung (10) nach einem der vorangehenden Ansprüche,
**dadurch gekennzeichnet, dass** der Aufnahmerahmen (28) oberhalb der Einspannvorrichtung (14) angeordnet ist und dass die Bearbeitungseinrichtung (18) aus dem Aufnahmerahmen (28) nach unten auf die Einspannvorrichtung (14) zu ragt.

11. Vorrichtung (10) nach einem der vorangehenden Ansprüche,
**gekennzeichnet durch** einen an der Bearbeitungseinrichtung (18) angebrachten Messkopf (44).

12. Vorrichtung (10) nach einem der vorangehenden Ansprüche,
**dadurch gekennzeichnet, dass** die Verlagerung der Bearbeitungseinrichtung (18) entlang wenigstens einer der Positionierachsen (X, Y, Z), vorzugsweise entlang jeder der Positionierachsen, oder/und gegebenenfalls die Verschwenkung um die Schwenkachse (A, B) numerisch gesteuert erfolgt.

13. Vorrichtung (10) nach einem der vorangehenden Ansprüche,
**dadurch gekennzeichnet, dass** das Bearbeitungswerkzeug eine Schleifscheibe (20) oder ein Erodierwerkzeug ist.

## Claims

1. Apparatus (10) for machining workpieces, in particular workpieces provided with cutting teeth, such as bandsaw blades or circular-saw blades for example, comprising:
- a base (12),
- a machining device (18) displaceable relative to the base (12) and having at least one machining tool (20) rotationally drivable about a drive axis, and
- a clamping device (14) for securing the workpiece to be machined,
wherein the machining device (18) is designed with a multiaxis arrangement (24), by means of which the machining tool (20) can be positioned in different machining positions relative to the workpiece to be machined,
wherein further the multiaxis arrangement (24) is received within a support frame (26) open on at least one side and coupled to the base (12), and wherein the support frame (26) is received in a receiving frame (28),
**characterized in that** the receiving frame (28) is pivotable relative to the base (12) about a pivot axis (A).

2. Apparatus (10) according to Claim 1,
**characterised in that** the multiaxis arrangement (24) is received in a central opening of the support frame (26) and is enclosed by the support frame (26).

3. Apparatus (10) according to Claim 1 or 2,
**characterised in that** the multiaxis arrangement (24) has a first positioning axis (X) which enables displacement of the machining tool (20) within the support frame (26) in the direction along the longitudinal extent or the transverse extent of the support frame (26).

4. Apparatus (10) according to one of Claims 1 to 3,
**characterised in that** the multiaxis arrangement (24) has a second positioning axis (Z) which enables displacement of the machining tool (20) within the support frame (26) in the direction orthogonal to a plane defined by the direction of the longitudinal extent and the direction of the transverse extent of the support frame (26).

5. Apparatus according to one of the preceding claims,
**characterised in that** the machining device (18) has a further machining tool (20) rotationally drivable about a further machining axis, wherein machining axes of the machining tools run substantially parallel to one another.

6. Apparatus (10) according to Claim 5,
**characterised in that** the two machining axes are assigned to the first positioning axis (X) and displaceable along the latter independently of one another.

7. Apparatus (10) according to one of the preceding claims,
**characterised in that** the support frame (26) is displaceable in the receiving frame (28) along a third positioning axis (Y) which enables displacement in the direction along the transverse extent or the longitudinal extent of the support frame (26), preferably in the direction orthogonal to the first and the second positioning axis (X, Z).

8. Apparatus (10) according to one of the preceding claims,
**characterised in that** the support frame (26) is received in a central opening of the receiving frame (28) and is enclosed by the receiving frame (28).

9. Apparatus (10) according to one of the preceding claims,
**characterised in that** the machining tool (20) engages at a predetermined geometrical point on the workpiece to be machined, the pivot axis (A) running substantially through the geometrical point.

10. Apparatus (10) according to one of the preceding claims,
**characterised in that** the receiving frame (28) is arranged above the clamping device (14) and **in that** the machining device (18) projects out of the receiving frame (28) downwards towards the clamping device (14).

11. Apparatus (10) according to one of the preceding claims,
**characterised by** a measuring head (44) attached to the machining device (18).

12. Apparatus (10) according to one of the preceding claims,
**characterised in that** the displacement of the machining device (18) along at least one of the positioning axes (X, Y, Z), preferably along each one of the positioning axes, or/and optionally the pivoting about the pivot axis (A, B) is effected with numerical control.

13. Apparatus (10) according to one of the preceding claims,
**characterised in that** the machining tool is a grinding wheel (20) or an eroding tool.

## Revendications

1. Dispositif d'usinage (10) de pièces, notamment pour des pièces pourvues de dents, telles que par exemple des lames de scie à ruban ou des lames de scie circulaire, comprenant :
- une base (12),
- un agencement d'usinage (18) déplaçable par rapport à la base, comportant au
moins un outil d'usinage (20) entraînable en rotation autour d'un axe d'entraînement et
- un dispositif de serrage (14) pour fixer la pièce à usiner,
ledit agencement d'usinage (18) étant constitué d'un agencement à axes multiples (24) au moyen duquel l'outil d'usinage (20) est positionnable dans différentes positions d'usinage par rapport à la pièce à usiner,
ledit agencement à axes multiples (24) étant logé à l'intérieur d'un cadre porteur (26) couplé à la base (12) et au moins ouvert sur un côté, et ledit cadre porteur (26) étant logé dans un cadre récepteur (28),
**caractérisé en ce que** le cadre récepteur (28) est pivotable autour d'un axe de pivotement (A) par rapport à la base (12).

2. Dispositif (10) selon la revendication 1,
**caractérisé en ce que** l'agencement à axes multiples (24) est logé dans une ouverture centrale du cadre porteur (26) et ceint par le cadre porteur (26).

3. Dispositif (10) selon la revendication 1 ou 2,
**caractérisé en ce que** l'agencement à axes multiples (24) présente un premier axe de positionnement (X) permettant le déplacement de l'outil d'usinage (20) à l'intérieur du cadre porteur (26) en direction et le long de l'étendue longitudinale ou transversale du cadre porteur (26).

4. Dispositif (10) selon l'une des revendications 1 à 3,
**caractérisé en ce que** l'agencement à axes multiples (24) présente un deuxième axe de positionnement (Z) permettant le déplacement de l'outil d'usinage (20) à l'intérieur du cadre porteur (26) en direction orthogonale par rapport à un plan serré depuis le sens d'étendue longitudinale ou transversale du cadre porteur (26).

5. Dispositif (10) selon l'une des revendications précédentes,
**caractérisé en ce que** l'agencement d'usinage (18) présente un outil d'usinage (20) supplémentaire entraînable en rotation autour d'un axe d'usinage supplémentaire, les axes d'usinage des outils d'usinage étant pour l'essentiel parallèles les uns par rapport aux autres.

6. Dispositif (10) selon la revendication 5,
**caractérisé en ce que** les deux axes d'usinage sont attribués au premier axe de positionnement (X) et indépendamment déplaçables le long de ce dernier.

7. Dispositif (10) selon l'une des revendications précédentes,
**caractérisé en ce que** le cadre porteur (26) à l'intérieur du cadre récepteur (28) est déplaçable le long d'un troisième axe de positionnement (Y), lequel permet un déplacement en direction et le long de l'étendue transversale ou longitudinale du cadre porteur (26), de préférence en direction orthogonale par rapport au premier et au second axe de positionnement (X, Z).

8. Dispositif (10) selon l'une des revendications précédentes,
**caractérisé en ce que** le cadre porteur (26) est logé dans une ouverture centrale du cadre récepteur (28) et ceint par le cadre récepteur (28).

9. Dispositif (10) selon l'une des revendications précédentes,
**caractérisé en ce que** l'outil d'usinage (20) attaque la pièce à usiner à un point prédéterminé de celle-ci, l'axe de pivotement (A) passant pour l'essentiel par ledit point géométrique.

10. Dispositif (10) selon l'une des revendications précédentes,
**caractérisé en ce que** le cadre récepteur (28) est disposé au-dessus du dispositif de serrage et que l'agencement d'usinage (18) fait saillie du cadre récepteur (28) vers le bas en direction du dispositif de serrage (14).

11. Dispositif (10) selon l'une des revendications précédentes,
**caractérisé par** une tête de mesure (44) montée sur l'agencement d'usinage (18).

12. Dispositif (10) selon l'une des revendications précédentes, **caractérisé en ce que** le déplacement de l'agencement d'usinage (18) le long d'au moins un des axes de positionnement (X, Y, Z), de préférence le long de chacun des axes de positionnement, et/ou, le cas échéant, le pivotement autour de l'axe de pivotement (A, B), s'effectuent par commande numérique.

13. Dispositif (10) selon l'une des revendications précédentes,
**caractérisé en ce que** l'outil d'usinage est un disque de meulage (20) ou un outil érodeur.
